# EUROPÄISCHE PATENTSCHRIFT

(11) **EP 3 765 239 B1**
(45) Veröffentlichungstag und Bekanntmachung des Hinweises auf die Patenterteilung: **01.05.2024**
(21) Anmeldenummer: 19711320.2
(22) Anmeldetag: 13.03.2019
(51) Int. Cl.: B24B 49/00, B24B 51/00

(54) **DREHZAHLSTEUERUNG BEIM ROBOTERGESTÜTZTEN SCHLEIFEN**
ROTATIONAL SPEED CONTROL IN ROBOT-ASSISTED GRINDING
RÉGULATION DE VITESSE AVEC RECTIFICATION ASSISTÉE PAR ROBOT

(30) Priorität: 15.03.2018 DE 102018106086
(43) Veröffentlichungstag der Anmeldung: 20.01.2021
(73) Patentinhaber: FerRobotics Compliant Robot Technology GmbH, 4040 Linz (AT)
(72) Erfinder: NADERER, Ronald, 4181 Oberneukirchen (AT)
(74) Vertreter: Westphal, Mussgnug & Partner, Patentanwälte mbB
(86) Internationale Anmeldenummer: PCT/EP2019/056300
(87) Internationale Veröffentlichungsnummer: WO 2019/175251

(56) Entgegenhaltungen:
- WO-A1-2016/145472
- DE-A1-102006 049 956
- DE-A1-102014 119 532

## Beschreibung

### TECHNISCHES GEBIET

Die vorliegende Erfindung betrifft eine Schleifmaschine zum robotergestützten Schleifen sowie ein robotergestütztes Verfahren zum Schleifen von Werkstückoberflächen.

### HINTERGRUND

Bei robotergestützten Schleifvorrichtungen wird eine Schleifmaschine (z.B. eine elektrisch betriebene Schleifmaschine mit rotierender Schleifscheibe als Schleifwerkzeug) von einem Manipulator, beispielsweise einem Industrieroboter, geführt. Dabei kann die Schleifmaschine auf unterschiedliche Weise mit dem sogenannten TCP (*Tool Center Point*) des Manipulators gekoppelt sein, sodass der Manipulator Position und Orientierung der Maschine praktisch beliebig einstellen kann. Industrieroboter sind üblicherweise positionsgeregelt, was eine präzise Bewegung des TCP entlang einer gewünschten Trajektorie ermöglicht. Um beim robotergestützten Schleifen ein gutes Ergebnis zu erzielen ist in vielen Anwendungen eine Regelung der Prozesskraft (Schleifkraft) nötig, was mit herkömmlichen Industrierobotern oft nur schwer mit hinreichender Genauigkeit zu realisieren ist. Die großen und schweren Armsegmente eines Industrieroboters besitzen eine zu große Massenträgheit, als das ein Regler (*closed-loop controller*) rasch genug auf Schwankungen der Prozesskraft reagieren zu könnte. Um dieses Problem zu lösen, kann zwischen TCP des Manipulators und der Schleifmaschine ein im Vergleich zum Industrieroboter kleiner Linearaktor angeordnet sein, der den TCP des Manipulators mit der Schleifmaschine koppelt. Der Linearaktor regelt während des Schleifens lediglich die Prozesskraft (also die Anpresskraft zwischen Schleifwerkzeug/Schleifscheibe und Werkstück) während der Manipulator die Schleifmaschine samt Linearaktor (und damit das Schleifwerkzeug) positionsgeregelt entlang einer vorgebbaren Trajektorie bewegt.

Ein Beispiel einer robotergestützten Schleifvorrichtung ist in der Publikation DE 10 2014 119 532 A1 beschrieben. Diese offenbart eine robotergestützte Schleifvorrichtung mit einem Drehzahlregler, der dazu ausgebildet ist, eine Rotationsgeschwindigkeit des Schleifwerkzeugs abhängig von einer gemessenen Ist-Auslenkung des Aktors und einer Referenz-Auslenkung einzustellen. Somit wird eine verschleißbedingte Reduktion der Umfangsgeschwindigkeit der Schleifscheibe durch eine entsprechende Erhöhung der Rotationsgeschwindigkeit kompensiert. Die für die Steuerung notwendige Referenz-Auslenkung des Aktors wird laufend gemessen. Somit beginnt die Anpassung der Drehgeschwindigkeit erst deutlich nach Kontakterkennung im Laufe des Bearbeitungsprozesses, nachdem die Schleifscheibe entsprechend abgenutzt wurde. Eine weitere Vorrichtung zum automatisierten Bearbeiten von Werkstücken ist aus der Publikation DE 10 2006 049 956 A2 bekannt. Die Publikation WO 2016/145472 A1 beschreibt eine robotergestützte Schleifvorrichtung, bei der der Motor abhängig von der Prozesskraft angesteuert wird, um belastungsabhängige Drehzahlschwankungen der Schleifmaschine zu vermeiden.

Für die Bearbeitung von Oberflächen können Orbital- oder Exzenterschleifmaschinen verwendet werden. Dabei ist die Schleifmaschine bereits eingeschaltet (d.h. die Schleifscheibe rotiert) wenn die Schleifscheibe die zu bearbeitende Oberfläche kontaktiert. Dabei kann das Problem auftreten, dass beim Kontaktieren der zu bearbeitenden Oberfläche mit Hilfe des Roboters Kratzer oder Riefen verursacht werden. Ein menschlicher Facharbeiter kann derartige unerwünschte Effekte vermeiden, indem er die Schleifmaschine besonders sanft auf die Oberfläche aufsetzt, was bei robotergestützten Verfahren nicht immer in ausreichendem Maße möglich ist.

Die Erfinder haben es sich zur Aufgabe gemacht, eine verbesserte Schleifvorrichtung für robotergestütztes Schleifen zu entwickeln.

### ZUSAMMENFASSUNG

Die oben genannte Aufgabe wird durch die Schleifvorrichtung gemäß Anspruch 1 sowie durch das Verfahren gemäß Anspruch 7 gelöst. Unterschiedliche Ausführungsformen und Weiterentwicklungen sind Gegenstand der abhängigen Ansprüche.

Im Folgenden wird eine Schleifvorrichtung zur Bearbeitung einer Oberfläche beschrieben. Gemäß einem Ausführungsbeispiel weist die Schleifvorrichtung eine mit einem Manipulator gekoppelte Schleifmaschine mit einem Motor und einem von dem Motor angetriebenen Schleifwerkzeug sowie eine Steuerung auf. Diese ist dazu ausgebildet die Schleifmaschine anzusteuern, um die Drehzahl des Schleifwerkzeugs einzustellen, mittels des Manipulators die Schleifmaschine zu positionieren, um die Oberfläche mit dem Schleifwerkzeug zu kontaktieren, während die Schleifmaschine mit einer ersten Drehzahl betrieben wird, und einen Kontakt zwischen Schleifwerkzeug und der Oberfläche zu detektieren. Als Reaktion auf die Detektion eines Kontakts wird die Drehzahl des Schleifwerkzeugs von der ersten Drehzahl auf eine zweite Drehzahl erhöht.

Des Weiteren wird ein Verfahren zum automatisierten Schleifen von Oberflächen beschrieben. Gemäß einem Ausführungsbeispiel umfasst das Verfahren das robotergestützte Positionieren einer Schleifmaschine mit einem Schleifwerkzeug, sodass das Schleifwerkzeug die Oberfläche kontaktiert, während die Schleifmaschine mit einer ersten Drehzahl betrieben wird, sowie das Detektieren des Kontakts zwischen Schleifwerkzeug und der Oberfläche. Das Verfahren umfasst weiter - als Reaktion auf die Detektion des Kontakts - das Erhöhen der Drehzahl des Schleifwerkzeugs von der ersten Drehzahl auf eine zweite Drehzahl.

### KURZE BESCHREBIBUNG DER ZEICHNUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 zeigt schematisch ein Beispiel einer robotergestützten Schleifvorrichtung.
Figur 2 zeigt anhand eines Diagramms die Steuerung der Drehzahl des Schleifwerkzeugs als Reaktion auf eine Detektion eines Kontakts zwischen Schleifwerkzeug und Werkstück.
Figur 3 zeigt anhand eines Diagramms die Regelung der Kontaktkraft und die Steuerung der Drehzahl des Schleifwerkzeugs als Reaktion auf eine Detektion eines Kontakts zwischen Schleifwerkzeug und Werkstück.
Figur 4 ist ein Flussdiagramm zur Darstellung eines Ausführungsbeispiels eines Verfahrens zum robotergestützten Schleifen.

### DETAILLIERTE BESCHREIBUNG

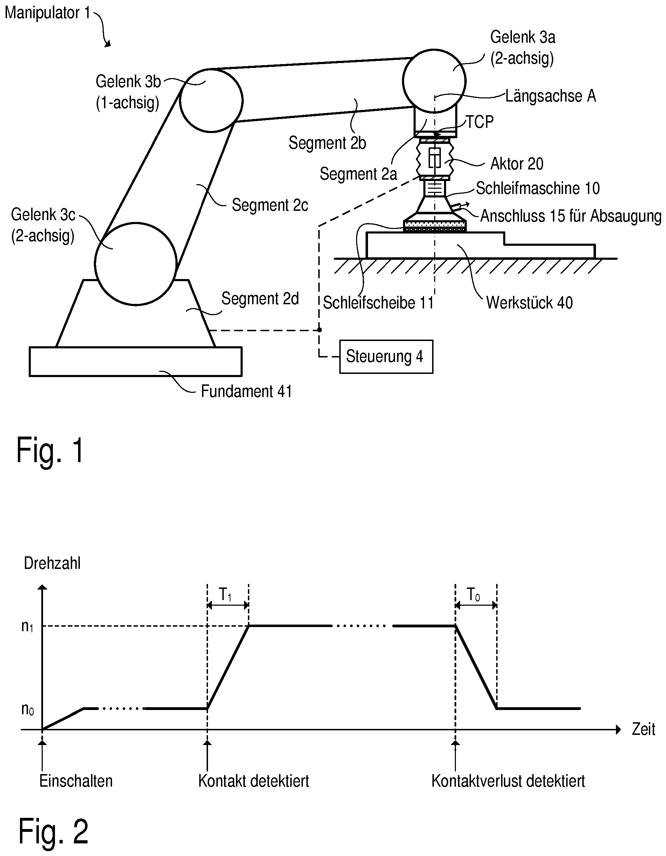

Bevor verschiedene Ausführungsbeispiele der vorliegenden Erfindung im Detail erläutert werden, wird zunächst ein Beispiel einer robotergestützten Schleifvorrichtung beschrieben. Diese umfasst einen Manipulator 1, beispielsweise einen Industrieroboter und eine Schleifmaschine 10 mit rotierendem Schleifwerkzeug (z.B. eine Orbitalschleifmaschine), wobei dieses mit dem sogenannten *Tool-Center-Point* (TCP) des Manipulators 1 über einen Linearaktor 20 gekoppelt ist. Im Falle eines Industrieroboters mit sechs Freiheitsgraden kann der Manipulator aus vier Segmenten 2a, 2b, 2c und 2d aufgebaut sein, die jeweils über Gelenke 3a, 3b und 3c verbunden sind. Das erste Segment ist dabei meist starr mit einem Fundament 41 verbunden (was jedoch nicht zwangsläufig der Fall sein muss). Das Gelenk 3c verbindet die Segmente 2c und 2d. Das Gelenk 3c kann 2-achsig sein und eine Drehung des Segments 2c um eine horizontale Drehachse (Elevationswinkel) und eine vertikale Drehachse (Azimutwinkel) ermöglichen. Das Gelenk 3b verbindet die Segmente 2b und 2c und ermöglicht eine Schwenkbewegung des Segments 2b relativ zur Lage des Segments 2c. Das Gelenk 3a verbindet die Segmente 2a und 2b. Das Gelenk 3a kann 2-achsig sein und daher (ähnlich wie das Gelenk 3c) eine Schwenkbewegung in zwei Richtungen ermöglichen. Der TCP hat eine feste Relativposition zum Segment 2a, wobei dieses üblicherweise noch ein Drehgelenk (nicht dargestellt) umfasst, dass eine Drehbewegung um eine Längsachse A des Segments 2a ermöglicht (in Fig. 1 als strichpunktierte Line eingezeichnet, entspricht der Drehachse des Schleifwerkzeugs). Jeder Achse eines Gelenks ist ein Aktor zugeordnet, der eine Drehbewegung um die jeweilige Gelenksachse bewirken kann. Die Aktoren in den Gelenken werden von einer Robotersteuerung 4 gemäß einem Roboterprogramm angesteuert. Verschiedene Industrieroboter/Manipulatoren und dazugehörige Steuerungen sind an sich bekannt und werden daher hier nicht weiter erläutert.

Der Manipulator 1 ist üblicherweise positionsgeregelt, d.h. die Robotersteuerung kann die Pose (Ort und Orientierung) des TCP festlegen und diesen entlang einer vordefinierten Trajektorie bewegen. In Fig. 1 ist die Längsachse des Segments 2a, auf der der TCP liegt mit A bezeichnet. Wenn der Aktor 20 an einem Endanschlag anliegt, ist mit der Pose des TCP auch die Pose des Schleifwerkzeugs definiert. Wie eingangs bereits erwähnt, dient der Aktor 20 dazu, während des Schleifprozesses die Kontaktkraft (Prozesskraft) zwischen Werkzeug und Werkstück 40 auf einen gewünschten Wert einzustellen. Eine direkte Kraftregelung durch den Manipulator 1 ist für Schleifanwendungen in der Regel zu ungenau, da durch die hohe Massenträgheit der Segmente 2a-c des Manipulators 1 eine schnelle Kompensation von Kraftspitzen (z.B. beim Aufsetzen des Schleifwerkzeugs auf das Werkstück 40) mit herkömmlichen Manipulatoren praktisch nicht möglich ist. Aus diesem Grund ist die Robotersteuerung dazu ausgebildet, die Pose (Position und Orientierung) des TCP des Manipulators 1 zu regeln, während die Kraftregelung ausschließlich vom Aktor 20 bewerkstelligt wird.

Wie bereits erwähnt, kann während des Schleifprozesses die Kontaktkraft F_{K} (auch als Prozesskraft bezeichnet) zwischen Schleifwerkzeug und Werkstück 40 mit Hilfe des (Linear-) Aktors 20 und einer Kraftregelung (die beispielsweise in der Steuerung 4 implementiert sein kann) so eingestellt werden, dass die Kontaktkraft F_{K} (in Richtung der Längsachse A) zwischen Schleifwerkzeug und Werkstück 40 einem vorgebbaren Sollwert entspricht. Die Kontaktkraft ist dabei eine Reaktion auf die Aktorkraft, mit der der Linearaktor 20 auf die Werkstückoberfläche drückt. Bei fehlendem Kontakt zwischen Werkstück 40 und Werkzeug fährt der Aktor 20 aufgrund der fehlenden Kontaktkraft am Werkstück 40 gegen einen Endanschlag (nicht dargestellt da im Aktor 20 integriert) und drückt mit einer definierten Kraft gegen diesen. In dieser Situation (kein Kontakt) ist die Aktorauslenkung daher maximal und der Aktor befindet sich in einer Endposition. Die Positionsregelung des Manipulators 1 (die ebenfalls in der Steuerung 4 implementiert sein kann) kann vollkommen unabhängig von der Kraftregelung des Aktors 20 arbeiten. Der Aktor 20 ist nicht verantwortlich für die Positionierung der Schleifmaschine 10, sondern lediglich für das Einstellen und Aufrechterhalten der erwünschten Kontaktkraft F_{K} während des Schleifprozesses und zur Erkennung von Kontakt zwischen Werkzeug und Werkstück. Ein Kontakt kann z.B. in einfacher Weise dadurch erkannt werden, dass der Aktor sich aus der Endposition herausbewegt hat (Aktorauslenkung a ist kleiner als die maximale Auslenkung a_{MAX}).

Der Aktor kann ein pneumatischer Aktor sein, z.B. ein doppeltwirkender Pneumatikzylinder. Jedoch sind auch andere pneumatische Aktoren anwendbar wie z.B. Balgzylinder und Luftmuskel. Als Alternative kommen auch elektrische Direktantriebe (getriebelos) in Betracht. Es sei angemerkt, dass die Wirkrichtung des Aktors 20 nicht notwendigerweise mit der Längsachse A des Segments 2a des Manipulators zusammenfallen muss. Im Falle eines pneumatischen Aktors kann die Kraftregelung in an sich bekannter Weise mit Hilfe eines Regelventils, eines Reglers (implementiert in der Steuerung 4) und eines Druckluftspeichers realisiert werden. Die konkrete Implementierung ist jedoch für die weitere Erläuterung nicht wichtig und wird daher auch nicht detaillierter beschrieben. Schleifmaschinen weisen in der Regel eine Absaugung auf, um Schleifstaub abzusaugen. In Fig. 1 ist ein Anschluss 15 für einen Schlauch einer Absaugvorrichtung dargestellt.

Die Schleifmaschine 10 hat üblicherweise einen Elektromotor, der die Schleifscheibe 11 antreibt. Bei einer Orbitalschleifmachine ist die Schleifscheibe 11 an einer Trägerplatte montiert, die wiederum mit der Motorwelle des Elektromotors verbunden ist. Als Elektromotoren kommen Asynchronmotoren oder Synchronmotoren in Betracht. Synchronmotoren haben den Vorteil, dass sich die Drehzahl nicht mit der Belastung ändert (sondern lediglich der Schlupfwinkel), wohingegen bei Asynchronmaschinen die Drehzahl bei steigender Belastung sinkt. Die Belastung des Motors ist dabei im Wesentlichen proportional zur Kontaktkraft F_{K} und der Reibung zwischen der Schleifscheibe 11 und der zu bearbeitenden Oberfläche des Werkstücks 40.

Die hier beschriebenen Konzepte können auch bei Schleifmaschinen mit pneumatischem Motor (Druckluftmotor) angewendet werden. Mit Druckluft betriebene Schleifmaschinen können relativ kompakt gebaut werden, da Druckluftmotoren in der Regel ein geringes Leistungsgewicht aufweisen. Eine Drehzahlregelung ist mittels eines (z.B. von der Steuerung 4 elektrisch angesteuertes) Druckregelventils einfach möglich (zusätzlich oder alternativ auch mittels einer Drossel), wohingegen bei Synchron- und Asynchronmotoren (z.B. von der Steuerung 4 elektrisch angesteuerte) Frequenzumrichter für die Drehzahlsteuerung benötigt werden.

Um das Kontaktieren der zu bearbeitenden Werkstückoberfläche mit der Schleifscheibe (d.h. den Kontaktvorgang) "sanfter" zu gestalten, kann der Motor der Schleifmaschine 10 zuerst (vor dem Kontakt) mit einer ersten, niedrigeren Drehzahl n₀ betrieben werden. Daraufhin positioniert der Manipulator die Schleifmaschine über der zu bearbeitenden Oberfläche und bewegt die Schleifmaschine zur Oberfläche hin, bis die Schleifscheibe 11 die Oberfläche kontaktiert (siehe Fig. 1). Sobald die Steuerung einen Kontakt erkannt hat, wird die Drehzahl des Motors auf einen zweiten, höheren Wert n₁ erhöht. Nach einem Kontaktverlust (z.B. wenn der Manipulator 1 die Schleifmaschine von der Oberfläche wegbewegt), kann die Drehzahl wieder auf den Wert n₀ reduziert werden. Diese Situation ist in Fig. 2 dargestellt.

Der Anstiegszeit Ti der Drehzahl vom Wert n₀ auf den Wert n₁ kann ist durch die Dynamik der Schleifmaschine und der Drehzahlsteuerung (nach unten hin) begrenzt. Das heißt, auch wenn die Drehzahl abrupt "umgeschaltet" wird, dauert der Anstieg der Drehzahl von n₀ auf n₁ eine definierte Zeit. Gemäß einem Ausführungsbeispiel wird die Drehzahl gemäß einem definierten vorgebbaren Verlauf von dem ersten Wert n₀ auf den zweiten Wert n₁ erhöht. In diesem Fall kann die Drehzahl (mittels Drehzahlsteuerung) kontrolliert innerhalb eines definierten Zeitintervalls Ti erhöht werden. In dem dargestellten Beispiel wird die Drehzahl bei Kontaktverlust innerhalb einer Zeitspanne T₀ wieder auf den Wert n₀ reduziert. Die Zeitspanne ist nicht notwendigerweise gleich wie die Anstiegszeit Ti und kann z.B. größer als diese sein.

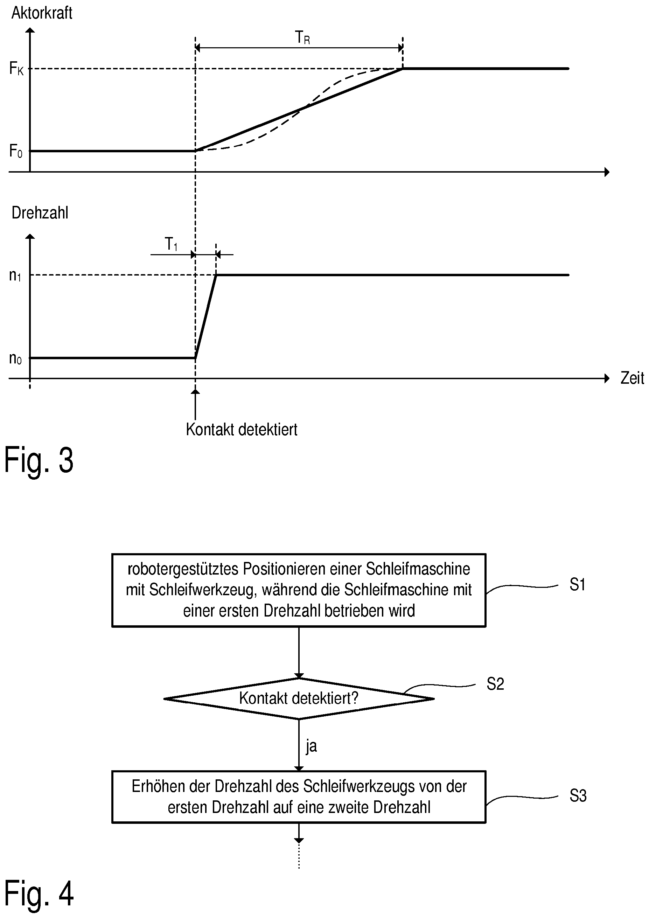

Die Diagramme aus Fig. 3 illustrieren ein Beispiel, bei dem die Steuerung 4 bei einer Kontakterkennung nicht nur mit einer Erhöhung der Drehzahl der Schleifscheibe 11 reagiert, sondern auch mit einer kontrollierten Erhöhung der Aktorkraft (vom Aktor auf die Oberfläche ausgeübte Kraft) beginnend bei einer einstellbaren Minimalkraft F₀ bis auf die gewünschte Kontaktkraft F_{K}. Gemäß einem Ausführungsbeispiel wird wie Aktorkraft innerhalb einer definierten Zeitspanne T_{R} erhöht. Der Anstieg der Aktorkraft kann linear sein, was jedoch nicht notwendigerweise der Fall sein muss. Die im ersten Diagramm der Fig. 3 gezeigte gestrichelte Line zeigt einen nichtlinearen (S-förmigen) Anstieg der Aktorkraft. Das zweite Diagramm der Fig. 3 zeigt den Anstieg der Drehzahl von n₀ auf n₁, wobei die Anstiegszeit Ti kürzer sein kann als die Zeitspanne T_{R}.

In Fig. 4 ist ein Beispiel eines Verfahrens dargestellt, das durch die hier beschriebene Schleifvorrichtung umgesetzt werden kann. Zunächst wird eine Schleifmaschine mit Schleifwerkzeug (vgl. Fig. 1, Schleifmaschine 10, Schleifwerkzeug 11) mittels eines Manipulators/Roboters positioniert, während die Schleifmaschine mit einer ersten Drehzahl betrieben wird (siehe Fig. 4, Schritt S1). Dieses Positionieren kann das Bewegen der Schleifmaschine entlang einer vordefinierten Trajektorie beinhalten. Während des Positioniervorganges wird detektiert, ob das Schleifwerkzeug die Oberfläche kontaktiert (siehe Fig. 4, Schritt S2). Dies kann beispielsweise dadurch erfolgen, dass die Auslenkung des Aktors (vgl. Fig. 1, Aktor 20), der für die Kraftregelung verwendet wird, sich ändert. Sobald ein Kontakt detektiert wurde, wird die Drehzahl des Motors der Schleifmaschine und damit die Drehzahl des Schleifwerkzeugs ausgehend von der ersten Drehzahl erhöht (siehe Fig. 4, Schritt S2).

## Patentansprüche

1. Eine Schleifvorrichtung zur Bearbeitung einer Oberfläche, die folgendes aufweist:
eine mit einem Manipulator (1) gekoppelte Schleifmaschine (10) mit einem Motor und einem von dem Motor angetriebenen Schleifwerkzeug (11);
eine Steuerung (4), die dazu ausgebildet ist:
die Schleifmaschine (10) anzusteuern, um die Drehzahl des Schleifwerkzeugs (11) einzustellen,
mittels des Manipulators (1) die Schleifmaschine (10) zu positionieren, um die Oberfläche mit dem Schleifwerkzeug (11) zu kontaktieren, während die Schleifmaschine mit einer ersten Drehzahl (n₀) betrieben wird,
einen Kontakt zwischen Schleifwerkzeug (11) und der Oberfläche zu detektieren, und
die Drehzahl des Schleifwerkzeugs (11) als Reaktion auf die Detektion eines Kontakts von der ersten Drehzahl (n₀) auf eine zweite Drehzahl (m) zu erhöhen.

2. Die Schleifvorrichtung gemäß Anspruch 1, die weiter aufweist:
einen Aktor (20) zur Einstellung einer Kontaktkraft zwischen Schleifwerkzeug (11) und der Oberfläche,
wobei die Steuerung (4) dazu ausgebildet ist, den Kontakt zwischen Schleifwerkzeug (11) und der Oberfläche basierend auf der Auslenkung des Aktors oder deren Veränderung zu detektieren.

3. Die Schleifvorrichtung gemäß Anspruch 2,
wobei die Steuerung (4) weiter dazu ausgebildet ist, als Reaktion auf die Detektion eines Kontakts die Kontaktkraft zwischen Schleifwerkzeug (11) und der Oberfläche zu erhöhen.

4. Die Schleifvorrichtung gemäß einem der Ansprüche 1 bis 3,
wobei die Steuerung (4) weiter dazu ausgebildet ist, einen Kontaktverlust zu detektieren und als Reaktion auf einen Kontaktverlust die Drehzahl des Schleifwerkzeugs (11) zu reduzieren.

5. Die Schleifvorrichtung gemäß einem der Ansprüche 1 bis 4,
wobei die Steuerung (4) weiter dazu ausgebildet ist, die Drehzahl des Schleifwerkzeugs (11) nach Maßgabe eines definierten und vorgebbaren Verlaufs zu erhöhen.

6. Die Schleifvorrichtung gemäß einem der Ansprüche 1 bis 5,
wobei der Manipulator (1) ein Industrieroboter ist.

7. Ein Verfahren zum automatisierten Schleifen von Oberflächen, das folgendes umfasst:
robotergestütztes Positionieren einer Schleifmaschine (10) mit einem Schleifwerkzeug (11), sodass das Schleifwerkzeug (11) die Oberfläche kontaktiert, während die Schleifmaschine (10) mit einer ersten Drehzahl (n₀) betrieben wird,
Detektieren des Kontakts zwischen Schleifwerkzeug (11) und der Oberfläche;
Erhöhen der Drehzahl des Schleifwerkzeugs (11) als Reaktion auf die Detektion des Kontakts von der ersten Drehzahl (n₀) auf eine zweite Drehzahl (m).

8. Das Verfahren gemäß Anspruch 7, das weiter aufweist:
Regeln der Kontaktkraft mittels eines Linearaktors (20), der zwischen einem Manipulator (1) und der Schleifmaschine (10) angeordnet ist,
wobei der Kontakt zwischen Schleifwerkzeug (11) und der Oberfläche basierend auf der Auslenkung des Linearaktors (20) oder deren Veränderung detektiert wird.

9. Das Verfahren gemäß Anspruch 8,
wobei als Reaktion auf die Detektion eines Kontakts die Kontaktkraft zwischen Schleifwerkzeug (11) und der Oberfläche erhöht wird.

10. Das Verfahren gemäß einem der Ansprüche 7 bis 9, das weiter aufweist:
Detektieren eines Kontaktverlusts, und
Reduzieren der Drehzahl des Schleifwerkzeugs (11) als Reaktion auf die Detektion eines Kontaktverlusts.

11. Das Verfahren gemäß einem der Ansprüche 7 bis 10,
wobei die Drehzahl des Schleifwerkzeugs (11) nach Maßgabe eines definierten und vorgebbaren Verlaufs erhöht wird.

12. Das Verfahren gemäß einem der Ansprüche 7 bis 11,
wobei das robotergestützte Positionieren der Schleifmaschine mittels eines Industrieroboters erfolgt.

## Claims

1. A grinding device for machining a surface, having:
a grinding machine (10) coupled to a manipulator (1) with a motor and a grinding tool (11) driven by the motor;
a controller (4) which is designed for:
controlling the grinding machine (10) in order to adjust the speed of the grinding tool (11),
positioning the grinding machine (10) by means of the manipulator (1) in order to contact the surface with the grinding tool (11) while the grinding machine is operated at a first speed (n₀),
detecting contact between the grinding tool (11) and the surface, and
increasing the speed of the grinding tool (11) from the first speed (n₀) to a second speed (n₁) in response to the detection of a contact.

2. The grinding device according to claim 1, further having:
an actuator (20) for adjusting a contact force between the grinding tool (11) and the surface,
wherein the controller (4) is designed to detect the contact between the grinding tool (11) and the surface based on the deflection of the actuator or its change.

3. The grinding device according to claim 2,
wherein the controller (4) is further designed to increase the contact force between the grinding tool (11) and the surface in response to the detection of contact.

4. The grinding device according to any one of claims 1 to 3,
wherein the controller (4) is further designed to detect a loss of contact and to reduce the speed of the grinding tool (11) in response to a loss of contact.

5. The grinding device according to any one of claims 1 to 4,
wherein the controller (4) is further designed to increase the speed of the grinding tool (11) in accordance with a defined and predeterminable course.

6. The grinding device according to any one of claims 1 to 5, wherein the manipulator (1) is an industrial robot.

7. A method for automated surface grinding, comprising:
robot assisted positioning of a grinding machine (10) with a grinding tool (11), so that the grinding tool (11) contacts the surface while the grinding machine (10) is operated at a first speed (n₀),
detecting the contact between the grinding tool (11) and the surface;
increasing the speed of the grinding tool (11) from the first speed (n₀) to a second speed (n₁) in response to the detection of the contact.

8. The method according to claim 7, further comprising:
controlling the contact force by means of a linear actuator (20) which is arranged between a manipulator (1) and the grinding machine (10),
wherein the contact between the grinding tool (11) and the surface is detected based on the deflection of the linear actuator (20) or its change.

9. The method according to claim 8,
wherein, in response to the detection of contact, the contact force between the grinding tool (11) and the surface is increased.

10. The method according to any one of claims 7 to 9, further comprising:
detecting a loss of contact, and
reducing the speed of the grinding tool (11) in response to detecting a loss of contact.

11. The method according to any one of claims 7 to 10,
wherein the speed of the grinding tool (11) is increased in accordance with a defined and predefinable course.

12. The method according to any one of claims 7 to 11,
wherein the robot assisted positioning of the grinding machine is carried out using an industrial robot.

## Revendications

1. Dispositif de rectification servant à l'usinage d'une surface, comprenant :
une rectifieuse (10) couplée à un manipulateur (1) avec un moteur et un outil de rectification (11) entraîné par le moteur ;
une commande (4) conçue pour :
commander la rectifieuse (10) afin de régler la vitesse de l'outil de rectification (11),
positionner la rectifieuse (10) au moyen du manipulateur (1) afin de mettre en contact la surface avec l'outil de rectification (11) pendant que la rectifieuse fonctionne à une première vitesse (n₀),
détecter le contact entre l'outil de rectification (11) et la surface, et
augmenter la vitesse de l'outil de rectification (11) de la première vitesse (n₀) à une seconde vitesse (n₁) en réponse à la détection d'un contact.

2. Dispositif de rectification selon la revendication 1, comprenant en outre :
un actionneur (20) pour régler une force de contact entre l'outil de rectification (11) et la surface,
dans lequel la commande (4) est conçue pour détecter le contact entre l'outil de rectification (11) et la surface en fonction de la déviation de l'actionneur ou de son changement.

3. Dispositif de rectification selon la revendication 2,
dans lequel la commande (4) est en outre conçue pour augmenter la force de contact entre l'outil de rectification (11) et la surface en réponse à la détection de contact.

4. Dispositif de rectification selon l'une des revendications 1 à 3,
dans lequel la commande (4) est en outre conçue pour détecter une perte de contact et pour réduire la vitesse de l'outil de rectification (11) en réponse à une perte de contact.

5. Dispositif de rectification selon l'une des revendications 1 à 4,
dans lequel la commande (4) est en outre conçue pour augmenter la vitesse de l'outil de rectification (11) selon une trajectoire définie et prédéterminée.

6. Dispositif de rectification selon l'une des revendications 1 à 5,
dans lequel le manipulateur (1) est un robot industriel.

7. Procédé de rectification de surface automatisé, comprenant :
le positionnement assisté par robot d'une rectifieuse (10) avec un outil de rectification (11), de sorte que l'outil de rectification (11) entre en contact avec la surface pendant que la rectifieuse (10) fonctionne à une première vitesse (n₀),
la détection du contact entre l'outil de rectification (11) et la surface ;
l'augmentation de la vitesse de l'outil de rectification (11) de la première vitesse (n₀) à une seconde vitesse (n₁) en réponse à la détection du contact.

8. Procédé selon la revendication 7, comprenant en outre :
la régulation de la force de contact au moyen d'un actionneur linéaire (20) disposé entre un manipulateur (1) et la rectifieuse (10),
dans lequel le contact entre l'outil de rectification (11) et la surface est détecté en fonction de la déviation de l'actionneur linéaire (20) ou de son changement.

9. Procédé selon la revendication 8,
dans lequel la force de contact entre l'outil de rectification (11) et la surface est augmentée en réponse à la détection d'un contact.

10. Procédé selon l'une quelconque des revendications 7 à 9, comprenant en outre :
la détection d'une perte de contact, et
la réduction de la vitesse de l'outil de rectification (11) en réponse à la détection d'une perte de contact.

11. Procédé selon l'une des revendications 7 à 10,
dans lequel la vitesse de l'outil de rectification (11) est augmentée selon une trajectoire définie et prédéterminée.

12. Procédé selon l'une des revendications 7 à 11,
dans lequel le positionnement assisté par robot de la rectifieuse est réalisé à l'aide d'un robot industriel.
